# EUROPÄISCHE PATENTANMELDUNG

(11) **EP 3 623 880 A1**
(43) Veröffentlichungstag der Anmeldung: **18.03.2020**
(21) Anmeldenummer: 18194255.8
(22) Anmeldetag: 13.09.2018
(51) Int. Cl.: G05B 17/02, G05B 19/418

(54) **VERFAHREN ZUR INTEGRATION VON DATEN VON ASSETS EINER TECHNISCHEN ANLAGE IN EINE PLATTFORM, DIGITALE PLATTFORM UND COMPUTERPROGRAMMPRODUKT**

(71) Anmelder: Siemens Aktiengesellschaft, 80333 München (DE)
(72) Erfinder: Seibert, Eckhard, 76767 Hagenbach (DE); Sharma, Rahul, 91058 Erlangen (DE)

(57) **Zusammenfassung**

Die Erfindung betrifft ein Verfahren zur Integration von Daten von Assets einer technischen Anlage in eine Plattform (CB), wobei zunächst mittels Ontologien allgemeine Modelle (AM, VM) für die Assets von domänenspezifischen technischen Anlagen definiert und allgemeine Datenquellen identifiziert werden, welche Informationen im Zusammenhang mit den Assets enthalten. Die Daten der identifizierten allgemeinen Datenquellen werden dann zu den zuvor definierten allgemeinen Modellen zugeordnet. Anschließend wird für eine spezielle Anlage ein Asset ausgewählt und das entsprechende allgemeine Modell in die Plattform (CB) importiert. Die Datenquellen der speziellen Anlage werden dann derart konfiguriert, dass für das ausgewählte Asset basierend auf den Datenquellen der speziellen Anlage iterativ und in Laufzeit das allgemeine Modell (AM, CM) mit den speziellen Daten dieser Anlage befüllt werden kann. Durch das Befüllen des allgemeinen Modells mit den speziellen Daten werden Instanzen (AI, CI) für das ausgewählte Asset gebildet und in der Plattform hinterlegt. Die Asset-Instanzen können nun in der Plattform leicht konfiguriert werden, sodass beliebige Applikationen über Programmierschnittstellen auf die Asset-Instanzen und ihre Daten problemlos zugreifen können.

## Beschreibung

Die Erfindung betrifft ein Verfahren zur Integration von Daten von Assets einer technischen Anlage in eine Plattform und eine entsprechende Plattform. Außerdem betrifft die Erfindung ein Computerprogrammprodukt, das direkt in den internen Speicher eines digitalen Computers geladen werden kann.

Eine Industrieanlage hat normalerweise einen Lebenszyklus von 20 bis 60 Jahren. Typischerweise wird die Anlage in mehreren Phasen inkrementell aufgebaut, wobei verschiedene Beteiligte einbezogen werden, die interne und externe Partner oder Dienstleister sein können. Jeder Stakeholder bringt oder nutzt heterogene Software-Werkzeuge und Technologien zur Planung, Konfiguration, Steuerung, Verwaltung und Überwachung von den jeweiligen Anlagenteilen oder Betriebsmitteln einer technischen Anlage, die als "Assets" bezeichnet werden.

Der Begriff eines Assets wird zumeist in der Prozessindustrie verwendet, z.B. in der chemischen, pharmazeutischen, petrochemischen und der Nahrungs- und Genussmittelindustrie. Bei Assets auf der Ebene eines Anlagenteils handelt es sich beispielsweise um Feldgeräte, Maschinen, rotierende und statische Maschinenteile, Rechner-Hardware oder um Software wie Betriebs-oder Anwenderprogramme. Der gesamte Lebenszyklus eines Assets umfasst allgemein die Phasen Planung, Engineering, Beschaffung, Inbetriebnahme, Betrieb, Austausch und Entsorgung. Der Begriff des Asset-Managements wird häufig durch Aufgaben und Ziele definiert wie das Erzeugen und Bereitstellen von Informationen, insbesondere über Verlauf und Prognose der Asset - Gesundheit, die Organisation des Einsatzes und der Zustandserhaltung der Assets und das Verwalten der Assets über den gesamten Lebenszyklus hinweg. Von besonderem Interesse sind häufig Identifikation, Asset - Historie, betriebswirtschaftliche und technische Daten der Assets mit dem Ziel einer Erhöhung der Zuverlässigkeit und Effizienz, einer Reduktion des Ersatzbedarfs und einer Wertsteigerung durch Nutzungserweiterung einer technischen Anlage.

Ein großer Teil der Investitionen in Industrieanlagen fließt heute in die Modernisierung von Anlagen, um ungeplante Stilllegung von Anlagen oder Teilen von Anlagen zu vermeiden, was zu großen Verlusten und in einigen Fällen auch zu Strafen führt.

Derzeit verfügbare Lösungen zur Instandhaltung oder Wartung von Assets einer technischen Anlage weisen allerdings vielfach Probleme auf. So zielen sie zumeist nur auf einzelne Assets ohne Berücksichtigung ihres Kontexts ab. Häufig werden Assets von heterogenen Anbietern hergestellt, so dass die Kompetenz zum Verständnis der Assets, der produzierten Daten und Fehlervorhersagen nur von unterschiedlichen Anbietern zur Verfügung gestellt werden kann. Das Onboarding, also das Konfigurieren von Assets vor Inbetriebnahme, erfolgt in diesen Anwendungen meist manuell, was sowohl Aufwand als auch Zeit und Fehler verursacht. Die erforderlichen Informationen zur Vorhersage eines abnormalen Betriebs eines Assets erfordern zusätzliche Messungen, die im Leitsystem der technischen Anlage normalerweise nicht vorhanden sind. Dies erfordert ein zusätzliches Engineering und ggfs. eine Umkonfiguration des Steuersystems, was sowohl Geld kostet, als auch unvorhergesehene Risiken beinhaltet. Ferner ist es schwierig, eine heterogene Datenbasis konsistent und aktuell zu halten.

Eine Optimierung der Instandhaltung einer Industrieanlage auf der Basis aller verfügbaren Daten wäre daher wünschenswert. Wenn die volle Funktionstüchtigkeit aller vorhandenen Assets gewährleistet ist, kann ein zuverlässiger und effizienter Betrieb gewährleistet werden. Produktionssteigerungen und ggfs. bessere Prozessedukte können so erreicht werden. Es besteht daher ein Bedarf, Daten aus unterschiedlichen Quellen zusammenzuführen und derart anzupassen, dass Applikationen, die diese unterschiedlichen Daten benötigen, besser arbeiten können. Insbesondere sollen spezielle Asset-spezifische Applikationen, diejenigen Daten zur Verfügung haben, die sie für die Analyse eines Assets benötigen.

Es ist daher die Aufgabe der vorliegenden Erfindung, ein Verfahren und ein geeignetes System bereitzustellen, das effizient und umfassend auf die unterschiedlichen Daten von Assets innerhalb einer technischen Anlage zugreift und die Daten effizient weiterverarbeitet, um eine verbesserte Datenanalyse und ein verbessertes Lebenszyklusmanagement der Assets zu gewährleisten.

Die Aufgabe wird durch ein Verfahren zur Integration von Daten von Assets einer technischen Anlage in eine einheitliche Plattform mit den Merkmalen des unabhängigen Patentanspruchs 1 gelöst. Die Aufgabe wird ferner durch eine digitale Plattform mit den Merkmalen des unabhängigen Patentanspruchs 6 gelöst. Außerdem wird die Aufgabe gelöst durch ein Computerprogrammprodukt nach Anspruch 11.

Das erfindungsgemäße Verfahren zur Integration von Daten von Assets einer technischen Anlage in eine Plattform ist dadurch gekennzeichnet, dass zunächst mittels Ontologien allgemeine Modelle für die Assets von domänenspezifischen technischen Anlagen definiert und allgemeine Datenquellen identifiziert werden, welche Informationen im Zusammenhang mit den Assets enthalten. Die Daten der identifizierten allgemeinen Datenquellen werden dann zu den zuvor definierten allgemeinen Modellen zugeordnet. Anschließend wird für eine spezielle Anlage ein Asset ausgewählt und das entsprechende allgemeine Modell in die Plattform importiert. Die Datenquellen der speziellen Anlage werden dann derart konfiguriert, dass für das ausgewählte Asset basierend auf den Datenquellen der speziellen Anlage iterativ und in Laufzeit das allgemeine Asset Modell mit den speziellen Daten dieser Anlage befüllt werden kann. Durch das Befüllen des allgemeinen Modells mit den speziellen Daten werden Instanzen für das ausgewählte Asset gebildet und in der Plattform hinterlegt. Die Asset-Instanzen können nun in der Plattform leicht konfiguriert werden, sodass beliebige Applikationen über Programmierschnittstellen auf die Asset-Instanzen und ihre Daten problemlos zugreifen können.

Der Begriff "allgemeinem" ist hier im Sinne von generisch oder allgemeingültig zu verstehen. Ein allgemeines Asset-Modell einer Pumpe beispielsweise würde eine umfassende Beschreibung einer Pumpe beinhalten, in dem Sinne dass allgemeine charakteristische Merkmale einer Pumpe oder Informationen im Zusammenhang mit einem Ventil und die Zusammenhänge, die zwischen diesen Merkmalen und Informationen bestehen, von dem Modell erfasst sind.

Der Begriff "speziell" ist hier auf eine spezielle technische Anlage bezogen. Während in dem allgemeinen Modell ein Ventil allgemein beschrieben ist (hat Absperrorgan, Stellantrieb, Stellungsregler), besitzen die Ventile innerhalb einer betrachteten speziellen Anlage bestimmte Kennzeichen (tags), und weisen spezielle Merkmale auf, die für die betrachtete Anlage einer speziellen Branche (z.B. Raffinerie, Papierfabrik, Kohlekraftwerk) zutreffen: Bei dem Absperrorgan handelt es sich um einen Schieber der Fa. Y, der Stellantrieb ist ein Piezoantrieb der Fa. P und bei dem Regler handelt es sich um einen PID-Regler der Fa. Z.

Die Vorteile der Erfindung liegen darin, dass auf der Basis der anfangs gebildeten allgemeinen Asset-Modelle und/oder Verbindungs-Modelle die Daten von Assets unterschiedlichster Hersteller, die in einer Vielzahl unterschiedlichster Systeme hinterlegt sind, effizient und einfach in eine gemeinsame Plattform integriert werden können. Sobald die Asset-Instanzen vorliegen sind die Daten harmonisiert und einfach weiterzuverarbeiten. Applikationen können nun einfach über programmierbare Schnittstellen auf die harmonierten Asset-Daten zugreifen, sodass sie für jegliche Auswertungen und Analysen verwendet werden können. Eine derart effiziente Datenintegration in eine Plattform hat den weiteren Vorteil, dass Sie insbesondere für Cloud-Anwendungen geeignet ist. Eine gemäß der Erfindung ausgebildete Plattform, insbesondere eine Cloud-Plattform, bildet die Basis für vielfältige, übergreifende Analysen über den gesamten Lebenszyklus eines Assets hindurch. Zusätzlich wird eine Eingliederung (onboarding) eines neuen Assets in eine technische Anlage deutlich erleichtert und optimiert, da nach Erstellung das allgemeine Asset-Modell einfach nur mit den spezifischen Daten der Anlage befüllt werden muss und die entsprechenden Instanzen für das neu einzugliedernde Asset gebildet werden und in der Plattform hinterlegt werden muss. Der Aufwand der Eingliederung des Assets ist somit deutlich reduziert.

In einer vorteilhaften Ausführung der Erfindung werden zunächst die statischen Daten der speziellen Anlage den allgemeinen Modellen zugeordnet und anschließend die dynamischen Daten, wobei die statischen Daten einem Anlagenengineering-System, einem Instandhaltungsmanagementsystem oder einem Archiv mit zeitunveränderlichen Daten der technischen Anlage entnommen werden und die dynamischen Daten einem Leitsystem, einem Diagnosesystem, einem Prozessdatenmanagementsystem oder einem Datenspeicher mit Prozesswerten, Messwerten, Diagnosedaten, Wartungsdaten und sonstigen zeitveränderlichen Daten der technischen Anlage. Der Vorteil dieser Vorgehensweise liegt darin, dass es einfacher ist, die dynamischen Daten zu integrieren, wenn das allgemeine Modell bereits mit statischen Daten befüllt ist.

In einer weiteren vorteilhaften Ausführung der Erfindung umfassen die allgemeinen Modelle für die Assets zumindest ein Modell, welches die Struktur und das Verhalten des Assets beschreibt, und/oder ein Modell, welches die Verbindungen des Assets im Gesamtsystem charakterisiert und welches dazu geeignet ist, dynamische Datenquellen der Anlage zu konfigurieren. Je mehr Aspekte die allgemeinen Modelle umfassen, desto umfangreicher, präziser und genauer ist die Beschreibung des Assets. Ferner können durch die unterschiedlichen Modelle bestimmte Eigenschaften eines Assets besser beschrieben werden. So kann beispielsweise wie in diesem Ausführungsbeispiel das statische und dynamische Verhalten eines Assets optimal abgebildet werden.

Vorteilhaft können beliebige Applikationen über eine Zugriffsebene auf die Daten und Instanzen der Assets der Plattform zugreifen. Hierdurch kann der Zugriff im Sinne des Anbieters der Plattform gestaltet werden, was eine große Flexibilität darstellt. In einer besonders vorteilhaften Ausführungsvariante der Erfindung ist beim Zugriff auf die Daten der Plattform eine Suchmaschine zwischengeschaltet, mittels der der Zugriff auf die relevanten Daten des ausgewählten Assets einfacher gestaltet werden kann und insbesondere kontextspezifische Suchen pro Asset durchgeführt werden können. Daraus resultiert eine hohe Benutzerfreundlichkeit und ein Nutzer der Plattform kann schneller die benötigten Informationen erhalten.

Weitere Vorteile und Ausgestaltungen der Erfindung, die einzeln oder in Kombination miteinander einsetzbar sind, sind Gegenstand der Unteransprüche.

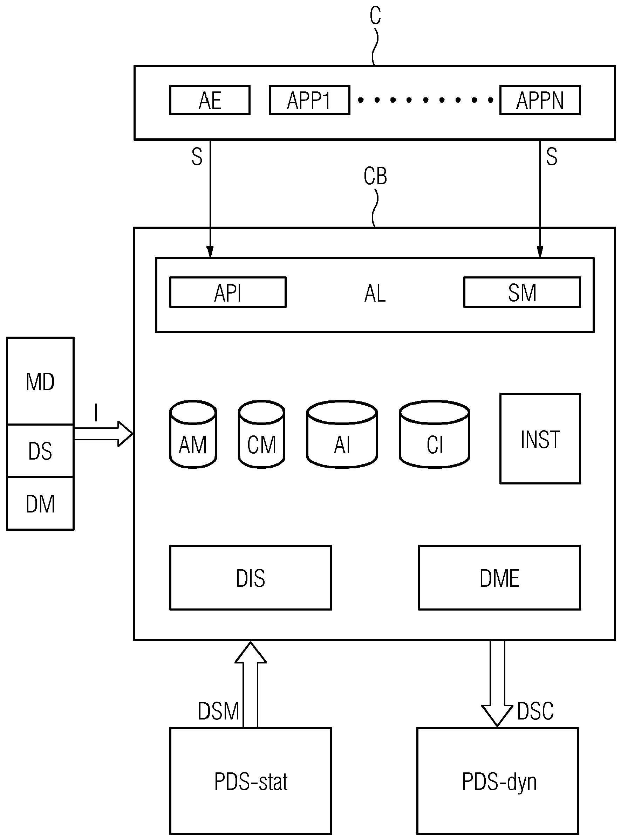

Im Folgenden wird die Erfindung anhand einer Figur näher beschrieben und erläutert. Die Figur zeigt schematisch ein Blockschaltbild einer Infrastruktur zur Integration von Daten gemäß einer Ausführungsform der vorliegenden Erfindung.

In der Figur ist ein Funktions-Blockschaltbild einer Ausführungsform der vorliegenden Erfindung, welche die Integration von Daten unterschiedlicher Assets einer technischen Anlage erlaubt. Bei der technischen Anlage kann es sich um eine Anlage der Prozessindustrie handeln z.B. in den Branchen der chemischen, pharmazeutischen, petrochemischen oder der Nahrungs- und Genussmittelindustrie. Auch Anlagen der Öl- oder Gasindustrie oder der Energieerzeugung sind umfasst, ebenso wie Anlagen der Fertigungsindustrie. Solche technische Anlagen werden zumeist mittels eines Automatisierungssystems gesteuert und überwacht.

Das erfindungsgemäße System kann beispielsweise in Form einer Software-Plattform mit Software-Komponenten realisiert sein. Die Plattform CB umfasst in oberster Hierarchie eine Zugriffsebene AL (engl. access layer). Die Zugriffsebene bietet Schnittstellen zur Anwendungsprogrammierung API (engl. application programming interface) für den Zugriff auf die erforderlichen Daten. Die APIs sind Programmteile, die von der Plattform CB anderen Programmen zur Anbindung an das System zur Verfügung gestellt werden. Beispielsweise kann es für eine Ventilüberwachungsapplikation APIs geben, die nach allen von einem bestimmten Hersteller A hergestellten Ventilen fragen können, die sich am funktionalen Standort XYZ befinden. Die Ebene AL ist nicht statisch und kann dynamisch erweitert werden, wenn die Generierung von neuen erforderlichen domänenspezifischen APIs basierend auf den Anwendungsanforderungen notwendig ist. Außerdem kann ein API der Ebene AL basierend auf dem AM automatisch erzeugt werden. Ferner kann die Zugriffsebene AL eine Suchmaschine SM umfassen, die auf herkömmliche Art ausgebildet ist und einem Nutzer der Plattform erlaubt, kontextspezifische Suchen nach einem Asset durchzuführen.

Die Konfiguration der APIs kann in einer eigenen Software-Komponente C erfolgen. Hier sind die Applikationen App1 bis AppN untergebracht und ein so genannter Asset Explorer AE, welcher den Zugriff auf die Daten einzelner Assets regelt. Typische Asset-spezifische Applikationen helfen dem Wartungspersonal einer technischen Anlage, Assets wie Ventile, Pumpen oder Motoren zu überwachen. Die Komponente C ist über eine oder mehrere Schnittstellen S mit der Backbone CB verbunden.

Neben der Zugriffsebene AL umfasst die erfindungsgemäße Plattform CB unterschiedliche Datenmodelle, anhand derer die Assets der technischen Anlage charakterisiert werden können. Diese Modelle sollen explizit die Entitäten, Typen und Beziehungen der Assets in maschineninterpretierbarem Format modellieren. Zur Definition dieser Modelle werden Ontologien verwendet. Als Ontologien werden in der Informatik meist sprachlich gefasste und formal geordnete Darstellungen einer Menge von Begrifflichkeiten und der zwischen ihnen bestehenden Beziehungen in einem bestimmten Gegenstandsbereich bezeichnet. Ein so genanntes "Asset model" AM soll daher in allgemeiner Form ein Asset der technischen Anlage, z.B. eine Hardware-Komponente im Feld modellieren. Das "Asset model" AM ist ein normalisiertes Datenmodell für ein Asset (wie Ventil, Pumpe usw.), das semantisch alle relevanten Eigenschaften / Attribute (einschließlich der Beziehung zwischen diesen) eines Assets darstellt und definiert. Es kombiniert demnach relevante Informationen aus verschiedenen Datenquellen wie z. B. statische Informationen aus den Funktionsplänen der technischen Anlage, dynamische Informationen (z.B. vom Wartungsmanagementsystem) und dynamische Daten, wie Messwerte oder diagnostische Daten. Die Asset-Modelle orientieren sich an internationalen Standards der Prozessindustrie wie beispielsweise dem Standard IEC 51756, DEXPI, NAMUR-MTP etc.

Ferner umfasst die Software-Plattform CB in diesem Ausführungsbeispiel auch ein so genanntes "Connection model" CM, welches die "Daten"-Verbindungen eines Assets enthält. In dem Connection Modell CM sind nur dynamische Daten aus verschiedenen Datenquellen, z.B. Diagnosedaten und/oder Prozessdaten von verschiedenen Leitsystemen oder Archiven enthalten.

Die allgemeinen Modelle AM und CM können beispielsweise in einem OWL-Format (OWL = Web Ontology Language) erstellt werden.

Zum besseren Verständnis wird für das Asset eines Ventils die Modelldefinition MD (Fig.) beispielhaft aufgezeigt. Die Modelldefinition MD kann außerhalb der Plattform CD durchgeführt werden. In dieser Ausführungsvariante werden zunächst die Strukturinformationen für ein Ventilsystem zusammengetragen und eine umfassende Beschreibung eines Ventilsystems erstellt:
- Ein Ventil ist ein Bauteil zur Absperrung oder Steuerung des Durchflusses von Fluiden.
- Ein Ventilsystem besteht mindestens aus einem Absperrorgan oder Verschlussteil (häufig als Ventil bezeichnet), einem Stellantrieb und häufig auch aus einem Stellungsregler.
- Es ist an einem Ort mit bestimmten Koordinaten x,y,z innerhalb einer technischen Anlage angeordnet.
- Mit dem Ventil sind Sensoren verbunden: Messgrößen der Sensoren können dabei z.B. der Durchfluss durch die von dem Ventil beeinflusste Leitung vor und hinter dem Ventil sein. Die Temperatur des Fluids kann gemessen werden.
- Es kann ferner ein Indikator (engl. flag für den Zustand des Ventils angegeben werden (Boolean-Variable: 0 = außer Betrieb, 1 = volle Funktion)
- Es können weitere diagnostische (Betriebszeit, Abnutzung) oder berechnete KPIs (Regelgenauigkeit) angegeben werden. (KPI = engl. "key performance indicator = Leistungsindikatoren)

Solche Informationen können beispielsweise mittels der Programmiersprache "Unified Modelling Language" (UML) erfasst werden. Im Sinne einer Sprache definiert UML dabei Bezeichner für die meisten bei einer Modellierung wichtigen Begriffe und legt mögliche Beziehungen zwischen diesen Begriffen fest.

In einer anderen Ausführungsvariante können für die Modelldefinition auch Standards verwendet werden. Bei diesen Standards handelt es sich um allgemeine Vorlagen für die Struktur von Assets und ihren Beziehungen, die bei verschiedenen Assets immer wieder verwendbar sind. Idealerweise liegen die Standards für Assets in verschiedenen Varianten vor, so dass sie nur auf die Anforderungen eines spezifischen Assets angepasst werden müssen.

Nachdem nun die Strukturen eines Assets mit all seinen Begriffen und Beziehungen zwischen den Begriffen gemäß den beschriebenen oder einem anderen geeigneten Algorithmus als Konzept-Modell erfasst sind, werden diese in eine semantische Umgebung übertragen und Ontologien erstellt. Dies kann beispielsweise mittels der "Web Ontology Language" (OWL), erfolgen.

OWL ist eine Semantic Web-Sprache, die komplexes Wissen über Dinge, Gruppen von Dingen und Beziehungen zwischen Dingen darstellen kann. Da OWL ist eine auf Computerlogik basierende Sprache ist, kann in OWL ausgedrücktes Wissen von anderen Computerprogrammen genutzt werden, um beispielsweise die Konsistenz dieses Wissens zu verifizieren oder implizites Wissen explizit zum Ausdruck zu bringen.

Mittels OWL können die zuvor zusammengetragenen und strukturierten Termini einer Domäne (hier die Begriffe im Zusammenhang mit einem Ventilsystem) und deren Beziehungen so beschrieben werden, dass eine andere Software die Bedeutung verarbeiten, also die Begriffe verstehen kann.

Mit der Ontologieerstellung ist die Definition eines allgemeinen Modells für ein Asset (AM) und seine Verbindungen (Connection Model CM) abgeschlossen.

In einem nächsten Schritt werden allgemein relevante Datenquellen identifiziert (data source DS in Fig.). Ferner werden auch die Daten, die den jeweiligen allgemeinen Datenquellen zuzuordnen sind, identifiziert (data mapping DM in Fig.). Auch diese Schritte können extern (außerhalb der Plattform CB) durchgeführt werden. In diesem Ausführungsbeispiel wird es sich dabei in erster Linie um Datenbanken des Leitsystems der technischen Anlage oder um Datenbanken mit Engineering-Daten, die sämtliche Anlageninformationen zum Design und Aufbau der Anlage, ihrer Hard- und Software und elektrotechnische Informationen enthalten. Relevante Datenquellen sind hier ferner ERP-Systeme (engl. enterprise resource planning, Unternehmensressourcenplanungssysteme), MES-Systeme (engl. manufacturing execution systems, Produktionsleitsysteme), CMMS-Systeme (engl. computerized maintenance management system, Instandhaltungssoftware) oder PDM-Systeme (Produktdatenmanagementsysteme), welche produktdefinierende, -repräsentierende und -präsentierende Daten als Ergebnis der Produktentwicklung speichert und verwaltet und sie in nachgelagerten Phasen des Produktlebenszyklus zur Verfügung stellt. Denkbar sind auch diagnostische Tools und Datenbanken im Zusammenhang mit Sensoren und Überwachungsalgorithmen mit ihren jeweiligen Daten.

Nach der Definition der allgemeinen Asset- und Verbindungsmodelle und der Identifikation der allgemeinen Datenquellen mit ihren zugeordneten Daten findet ein Import I der Modelle AM und CM und der zugeordneten Daten in die Plattform CB statt, sofern die zuvor beschriebenen Schritte außerhalb der Plattform durchgeführt wurden. Dazu werden so genannte "Data ingestion services" (DIS) implementiert, die beispielsweise das "Streamen" großer Datenmengen in einen Datenspeicher oder eine Cloud-Plattform erlauben. Die Datenströme erreichen den Datenspeicher oder die Plattform entweder kontinuierlich in Echtzeit oder in Stapeln (batches). Solche Datenaufnahmedienste können darüber hinaus bei der Priorisierung von Datenquellen, der Validierung einzelner Daten und Dateien und dem Weiterleiten von Daten an ein vorbestimmtes Ziel helfen. Der Import I kann beispielsweise nach Auswahl eines bestimmten Assets (hier Ventil) durchgeführt werden. Zur Auswahl eines Assets ist in der Plattform CB eine Eingabemaske vorgesehen. Die allgemeinen Modelle AM und CM können in einem Speicherkomponente (=Datenspeicher) oder einer Bibliothek der Plattform CB hinterlegt werden.

Anschließend werden die Datenquellen der speziellen Anlage (= Anlage deren Assets analysiert werden sollen) derart konfiguriert, dass für das ausgewählte Asset basierend auf den Datenquellen der speziellen Anlage iterativ und in Laufzeit das allgemeine Asset-Modell mit den speziellen Daten dieser Anlage befüllt werden kann. Das "Befüllen" der Modelle AM und CM erfolgt durch eine "Data Mapping Engine" DME, einer Komponente der Plattform CB, der die Zuordnung der speziellen Daten der zu analysierenden speziellen Anlage zu den allgemeinen Modellen AM und CM übernimmt.

Bei der Zuordnung der Daten der Datenquellen der speziellen Anlage zu den Asset-Modellen werden ebenfalls Werkzeuge aus dem semantischen Web verwendet, welche auf W3C-Standards basieren. Ein Beispiel hierfür ist die W3C-Standard-R2RML-RDB-RDF-Zuordnungssprache.

Für die Ventilüberwachung dieses Ausführungsbeispiels ist eine Zuordnung der Daten von folgenden Datenquellen vorteilhaft:
- relevante Informationen aus dem Rohrleitungsschema-Diagramm aus dem Engineering-Modell
- Anlagentopologie und Netzwerkinformationen von der Engineering Station PCS7
- Service- und Wartungsdaten vom CMMS-System, z.B. SAP-System

Allgemein können statische und dynamische Datenquellen einer technischen Anlage unterschieden werden. Die statischen Datenquellen einer Anlage PDS-stat (engl. plant data sources) liefern Anlageninstrumentierungsdaten, Anlagenplanungsdaten, Herstellungsdaten etc. und stammen zumeist aus einem Anlagenengineering-System, einem Instandhaltungsmanagementsystem oder einem Datenspeicher mit zeitunveränderlichen Daten der technischen Anlage, Die dynamischen Datenquellen einer Anlage PDS-dyn liefern Betriebsdaten, Sensordaten, diagnostische Daten etc. und stammen zumeist aus dem Leitsystem der technischen Anlage oder einem Diagnosesystem, einem Prozessdatenmanagementsystem oder einem Datenspeicher mit Prozesswerten, Messwerten, Diagnosedaten, Wartungsdaten und sonstigen zeitveränderlichen Daten der technischen Anlage.

Durch die Konfiguration der speziellen Datenquellen DSC (engl. data source configuration) und die Zuordnung der statischen und dynamischen Daten der entsprechenden speziellen Datenquellen DSM (engl. data source mapping) werden die allgemeinen Modelle AM und CM befüllt und damit Instanzen gebildet.

Mit dem Begriff "Instanz" wird ein konkretes Objekt bezeichnet. Ein Objekt bezeichnet in der objektorientierten Programmierung (OOP) ein Exemplar eines bestimmten Datentyps oder einer bestimmten Klasse (auch "Objekttyp" genannt). Objekte sind konkrete Ausprägungen ("Instanzen") eines Objekttyps und werden während der Laufzeit erzeugt, was als Instanziierung bezeichnet wird. Wurde demnach - wie in dem vorliegenden Ausführungsbeispiel - ein allgemeines Modell für das Asset "Ventil" definiert und nun mit den Daten einer speziellen Anlage, beispielsweise einer Anlage der chemischen Industrie, befüllt, stellt das Asset "Ventil" die Klasse oder Objekttyp dar und das Einlassventil mit Absperrklappe, Hebel und Durchsatzkontrolle der Fa. W. an einem speziellen Ort der Anlage ist eine besondere Ausprägung und somit eine Asset-Instanz.

Diese Instanzen, Asset-Instanzen AI und Connection Instanzen CI, sind in entsprechenden Datenspeichern (= Speicherkomponente) der Plattform CB hinterlegt. Mittels einer eigenen Komponente INST innerhalb der Plattform CB können die Instanzen in der Plattform derart konfiguriert werden, dass eine beliebige Applikation Appl, App2 oder AppN über eine Programmierschnittstelle API auf die Asset-Instanzen AI oder CI und ihre Daten zugreifen kann.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Verfahren zur Integration von Daten von Assets einer technischen Anlage in eine Plattform (CB),
**dadurch gekennzeichnet,**
- **dass** mittels Ontologien allgemeine Modelle (AM, CM) für die Assets einer domänenspezifischen technischen Anlage definiert werden und allgemeine Datenquellen identifiziert werden, welche Informationen im Zusammenhang mit den Assets enthalten, und die Daten der identifizierten allgemeinen Datenquellen zu den zuvor definierten allgemeinen Modellen (AM, CM) zugeordnet werden,
- **dass** anschließend für eine spezielle Anlage ein Asset ausgewählt wird und das entsprechende allgemeine Modell (AM, CM) in die Plattform (CB) importiert wird,
- **dass** Datenquellen der speziellen Anlage derart konfiguriert werden, dass für das ausgewählte Asset basierend auf den Datenquellen der speziellen Anlage iterativ und in Laufzeit das allgemeine Modell (AM, CM) mit den speziellen Daten dieser Anlage befüllt wird,
- **dass** durch das Befüllen des allgemeinen Modells (AM, CM) mit den speziellen Daten Instanzen (AI, CI) für das ausgewählte Asset gebildet werden und in der Plattform (CB) hinterlegt werden,
- **dass** die Instanzen (AI, CI) für das ausgewählte Asset in der Plattform (CB) derart konfiguriert werden, dass Applikationen (Appl, ..., AppN) über Programmierschnittstellen (S, API) auf die Instanzen (AI, CI) für das ausgewählte Asset und ihre Daten zugreifen kann.

2. Verfahren nach Anspruch 1,
**dadurch gekennzeichnet,**
**dass** zunächst die statischen Daten der speziellen Anlage den allgemeinen Modellen (AM, CM) zugeordnet werden und anschließend die dynamischen Daten zugeordnet werden, wobei die statischen Daten einem Anlagenengineering-System, einem Instandhaltungsmanagementsystem oder einem Datenspeicher mit zeitunveränderlichen Daten der technischen Anlage entnommen werden und die dynamischen Daten einem Leitsystem, einem Diagnosesystem, einem Prozessdatenmanagementsystem oder einem Datenspeicher mit Prozesswerten, Messwerten, Diagnosedaten, Wartungsdaten und sonstigen zeitveränderlichen Daten der technischen Anlage entnommen werden.

3. Verfahren nach Anspruch 1 oder 2,
**dadurch gekennzeichnet,**
**dass** die allgemeinen Modelle für die Assets zumindest ein Modell (AM) umfasst, welches die Struktur und das Verhalten des Assets beschreibt, und/oder ein Modell (CM) umfasst, welches die Verbindungen des Assets im Gesamtsystem charakterisiert und welches dazu geeignet ist, dynamische Datenquellen der Anlage zu konfigurieren.

4. Verfahren nach einem der vorhergehenden Ansprüche, **dadurch gekennzeichnet,**
**dass** Applikationen (Appl, ..., AppN) über eine Zugriffsebene (AL) auf die Daten und die Asset-Instanzen der Plattform (CB) zugreifen.

5. Verfahren nach Anspruch 4,
**dadurch gekennzeichnet,**
**dass** beim Zugriff auf die Daten der Plattform (CB) eine Suchmaschine (SM) zwischengeschaltet ist, mittels der eine kontextspezifische Suche pro Asset durchgeführt wird.

6. Digitale Plattform (CB) zur Integration von Daten von Assets einer technischen Anlage,
- mit Schnittstellen (I) zum Import von zuvor definierten allgemeinen Modellen (AM, CM) für Assets einer domänenspezifischen technischen Anlage,
wobei im Vorfeld die allgemeinen Modelle (AM, CM) für die Assets einer domänenspezifischen technischen Anlage mittels Ontologien definiert wurden und wobei allgemeine Datenquellen identifiziert wurden, welche Informationen im Zusammenhang mit den Assets enthalten, und die Daten der identifizierten allgemeinen Datenquellen zu den zuvor definierten allgemeinen Modellen (AM, CM) zugeordnet wurden,
- mit einer Zugriffsebene (AL), die derart ausgebildet ist, dass beliebige Applikationen (Appl, ..., AppN) über Programmierschnittstellen (S, API) auf die Plattform (CB) zugreifen können,
- mit weiteren Schnittstellen (DSM, DSC) zum Austausch von statischen und dynamischen Daten beliebiger Datenquellen (PDS-stat, PDS-dyn) einer speziellen technischen Anlage,
- mit Komponenten, die dazu ausgebildet sind, für ein ausgewähltes Asset und dessen allgemeinem Modell (AM, CM) die Datenquellen (PDS-stat, PDS-dyn) der technischen Anlage derart zu konfigurieren, dass für das ausgewählte Asset basierend auf den Datenquellen (PDS-stat, PDS-dyn) der technischen Anlage iterativ und in Laufzeit das allgemeine Modell (AM, CM) für das ausgewählte Asset mit den speziellen Daten dieser Anlage befüllt werden,
wobei durch das Befüllen des allgemeinen Modells (AM, CM) mit den speziellen Daten Instanzen (AI, CI) für das ausgewählte Asset gebildet werden und in der Plattform (CB) hinterlegt werden, und
- wobei die Instanzen (AI, CI) für das ausgewählte Asset in der Plattform (CB) derart konfiguriert werden, dass beliebige Applikationen (Appl, ..., AppN) auf die Instanzen (AI, CI) für das ausgewählte Asset und ihre Daten zugreifen kann.

7. Digitale Plattform nach Anspruch 6,
bei der ferner Berechnungskomponenten (DME) zur Zuordnung der statischen und dynamischen Daten der speziellen technischen Anlage zu den jeweiligen allgemeinen Modellen (AM, CM) vorhanden sind.

8. Digitale Plattform nach einem der vorhergehenden Ansprüche,
wobei die Datenquellen der technischen Anlage ein Anlagenengineering-System, ein Instandhaltungsmanagementsystem oder ein Datenspeicher mit zeitunveränderlichen Daten der technischen Anlage umfasst oder ein Leitsystem, ein Diagnosesystem, ein Prozessdatenmanagementsystem oder ein Datenspeicher mit Prozesswerten, Messwerten, Diagnosedaten, Wartungsdaten und sonstigen zeitveränderlichen Daten der technischen Anlage umfasst.

9. Digitale Plattform nach einem der vorhergehenden Ansprüche,
wobei die allgemeinen Modelle für die Assets zumindest ein Modell (AM) umfassen, welches die Struktur und das Verhalten des Assets beschreibt, und/oder ein Modell (CM) umfasst, welches die Verbindungen des Assets im Gesamtsystem charakterisiert.

10. Digitale Plattform nach einem der vorhergehenden Ansprüche,
wobei die Zugriffsebene (AL) eine Suchmaschine zur Durchführung einer kontextspezifischen Suche pro Asset umfasst.

11. Computerprogrammprodukt, das in den internen Speicher eines digitalen Computers geladen werden kann und Softwarecodeabschnitte umfasst, mit denen die Verfahrensschritte gemäß einem der Ansprüche 1 bis 5 ausgeführt werden, wenn das Produkt auf einem Computer läuft.
